# FASCICULE DE BREVET EUROPEEN

(11) **EP 1 722 111 B1**
(45) Date de publication et mention de la délivrance du brevet: **08.04.2009**
(21) Numéro de dépôt: 06290772.0
(22) Date de dépôt: 12.05.2006
(51) Int. Cl.: F16B 7/04, E04B 9/16

(54) **Dispositif de fixation destiné à la fixation d'un profilé métallique sur un support**
Befestigungselement zur Befestigung eines Metallprofils auf einem Träger
Fastening device for fastening a metal profile on a support

(30) Priorité: 12.05.2005 FR 0504771
(43) Date de publication de la demande: 15.11.2006
(73) Titulaire: PLACOPLATRE, 92150 Suresnes (FR)
(72) Inventeur: Harmel, Stéphane, 59520 Marquette lez Lille (FR); Truquin, Patrick, 60300 Senlis (FR); Rivaud, André, 77360 Vaires-Sur-Marne (FR)
(74) Mandataire: Santarelli

(56) Documents cités:
- FR-A- 2 622 259
- US-A- 3 608 857
- US-B1- 6 327 758

## Description

La présente invention concerne, d'une manière générale, la fixation sur un support d'un profilé métallique du type fourrure ou d'un quelconque autre élément d'ossature propre à recevoir un parement.

Une telle fixation concerne, notamment, les constructions dans lesquelles est rapporté intérieurement, sur des montants verticaux et par l'intermédiaire de profilés, un parement de plaques déposées de manière jointive les unes par rapport aux autres.

Il s'agit, par exemple, de plaques de plâtre cartonnées.

Les profilés à mettre en oeuvre pour supporter de telles plaques s'étendent transversalement par rapport aux montants verticaux portant l'ensemble et, pour leur fixation à chacun de ces montants, à leur croisement avec un tel montant, il est mis en ceuvre localement une patte de fixation comportant globalement, d'une part, une embase, par laquelle la patte est propre à être assujettie au support que constitue ce montant et, d'autre part, une tête à laquelle peut être assujettie, par exemple par encliquetage, la fourrure concernée.

On connaît, par exemple du document FR 2 622 259, une patte de fixation constituée de deux attaches distinctes, disposées de part et d'autre d'un support et qui, une fois fixées l'une à l'autre par des moyens de fixation, enserrent conjointement le support.

Les attaches présentent chacune deux ailes perpendiculaires l'une par rapport à l'autre : une première aile latérale, formant moitié de l'embase, par laquelle les attaches prennent appui sur le support, chacune respectivement sur deux côtés opposés du support, en formant conjointement l'embase correspondante, et une deuxième aile centrale. La deuxième aile centrale d'une attache comporte des moyens de fixation qui, en coopération avec des moyens de fixation complémentaires prévus sur l'aile centrale de l'autre attache, assurent la fixation des attaches l'une par rapport à l'autre.

Bien que ce dispositif de fixation soit satisfaisant, il existe toutefois un besoin de disposer d'un dispositif de fixation dont le montage sur le support soit simplifié.

Le document US 6,327,758 B1 décrit un dispositif de fixation élastique destiné à s'engager sur un support, comprenant une embase destinée à être en contact avec le support et un corps muni d'une tête.

Le dispositif est en une seule pièce et comporte deux parties pourvues de moyens d'appui respectifs destinés à enserrer conjointement le support sur deux côtés opposés de celui-ci, les moyens d'une des parties comprenant un organe d'encliquetage orienté en regard des moyens d'appui de l'autre partie.

La présente invention a ainsi pour objet un dispositif de fixation pour profilé métallique à rapporter sur un support, du genre comportant une embase destinée à être assujettie au support et un corps muni d'une tête destinée à être assujettie au profilé, caractérisé en ce que le dispositif de fixation est formé d'une seule pièce dans laquelle l'embase comporte deux parties dont au moins une est élastique par rapport à l'autre et qui sont pourvues de moyens d'appui respectifs destinés à enserrer conjointement le support sur deux côtés opposés de celui-ci, les moyens d'appui d'une des parties de l'embase, appelée première partie, comprenant au moins un organe d'encliquetage orienté en regard des moyens d'appui de l'autre partie de l'embase, appelée deuxième partie, caractérisé en ce que les moyens d'appui de la deuxième partie forment des moyens de retenue orientés vers ledit au moins un organe d'encliquetage, la pièce en vue de profil ayant la forme générale d'un siège, une partie de l'embase formant l'assise du siège, tandis que les moyens d'appui des première et deuxième parties de l'embase forment les pieds, le corps muni de la tête formant le dossier du siège et ayant une forme d'aile dont au moins une portion d'aile s'étend au-delà de la partie de l'embase formant l'assise du siège de manière à former une patte déformable élastiquement pourvue dudit au moins un organe d'encliquetage.

Ainsi, les moyens d'appui formant moyens de retenue sont destinés à s'engager sur un premier rebord du support pour coopérer avec ce rebord et empêcher tout retrait perpendiculairement à la direction d'engagement. Ledit au moins un organe d'encliquetage, quant à lui, est destiné à être encliqueté sur un second rebord opposé du support sous l'action d'une poussée exercée sur le dispositif de fixation sensiblement perpendiculairement à la direction d'engagement des autres moyens d'appui, après engagement de ces derniers sur le premier rebord du support.

La présence des moyens d'appui précités des deux parties de l'embase et l'élasticité d'au moins une d'entre elles permet d'obtenir un bon compromis entre facilité d'installation du dispositif sur le support et fiabilité de la fixation sur ce support.

Le dispositif de fixation étant en une seule pièce, il ne nécessite pas d'opération d'assemblage supplémentaire d'éléments intermédiaires en vue de constituer le dispositif, en plus de l'opération de montage du dispositif sur le support.

En outre, grâce à l'élasticité d'au moins une des parties formant l'embase du dispositif, ce dernier peut être facilement clipsé sur le support, ce qui rend le montage aisé.

Par ailleurs, le montage du dispositif de fixation selon l'invention ne nécessite aucun outillage.

De plus, avec un tel système d'accrochage du dispositif sur le support, tout décrochage intempestif du dispositif est évité.

Selon une caractéristique, ledit au moins un organe d'encliquetage a une forme générale du type comportant une rampe orientée en regard des moyens d'appui de la deuxième partie de l'embase et se terminant par un retour.

Selon une autre caractéristique, la pièce de fixation comporte une aile qui, d'une part, comprend la tête à une extrémité et, d'autre part, se sépare en direction de l'extrémité opposée de l'aile en trois portions d'aile s'étendant sensiblement dans un même plan, deux des trois portions d'aile étant prolongées pour former l'une des parties de l'embase tandis que la troisième portion d'aile est prolongée pour former l'autre partie de l'embase.

Selon une caractéristique, les deux portions d'aile prolongées pour former l'une des parties de l'embase sont agencées de part et d'autre de la troisième portion d'aile.

Selon une caractéristique, la première partie de l'embase s'étend sensiblement dans le même plan, appelé premier plan P₁, que celui dans lequel s'étendent les trois portions d'aile, tandis que la deuxième partie de l'embase s'étend successivement dans un deuxième plan P₂ sensiblement perpendiculaire au premier plan et dans un plan parallèle au premier plan.

Selon une caractéristique, les moyens d'appui de la première partie de l'embase comprennent deux organes d'encliquetage situés sensiblement à la même distance de la tête et écartés l'un de l'autre dans le premier plan.

Selon une caractéristique, la troisième portion d'aile est prolongée pour former la première partie de l'embase.

Selon une caractéristique, la deuxième partie de l'embase comprend une platine qui s'étend dans un plan sensiblement perpendiculaire à celui dans lequel s'étend le corps de la pièce, les moyens d'appui de la deuxième partie étant assujettis à cette platine, le rebord de l'ensemble s'étendant sensiblement perpendiculairement à la platine et le retour s'étendant sensiblement parallèlement à la platine.

Selon une caractéristique, les deux portions d'aile sont prolongées jusqu'à la platine de la deuxième partie de l'embase par l'intermédiaire de deux bretelles écartées l'une de l'autre et s'étendant sensiblement dans le deuxième plan.

Selon une caractéristique, un système de rattrapage de jeu est prévu sur l'embase.

Plus particulièrement, des découpes sont pratiquées dans la platine de manière à constituer une lamelle élastique libre sur trois côtés, ladite lamelle étant pourvue d'au moins un bossage sur une face de la platine destinée à être agencée contre le support.

Selon une caractéristique, le ou les organes d'encliquetage ont chacun une forme d'ergot de retenue.

D'autres caractéristiques et avantages apparaîtront au cours de la description qui va suivre, donnée uniquement à titre d'exemple non limitatif et faite en référence aux dessins annexés, sur lesquels :
- les figures 1 a à 1 e représentent les étapes successives du montage d'un dispositif de fixation selon l'invention sur un support ;
- les figures 2a à 2c représentent les étapes successives d'installation d'un profilé sur le dispositif de fixation monté sur un support tel qu'illustré à la figure 1e ;
- les figures 3 à 5 sont des vues schématiques en perspective d'un dispositif de fixation selon l'invention suivant différentes orientations angulaires ;
- la figure 6 illustre une vue en perspective du dispositif de fixation selon l'invention monté sur un support ;
- la figure 7 représente une première variante de réalisation du dispositif de fixation illustré aux figures 1 à 6 ;
- les figures 8 et 9 représentent une deuxième variante de réalisation du dispositif de fixation illustré aux figures 1 à 6 ;
- la figure 10 représente une troisième variante de réalisation du dispositif de fixation illustré aux figures 1 à 6.

Un dispositif de fixation selon l'invention est représenté sur les figures et désigné par la référence générale notée 10.

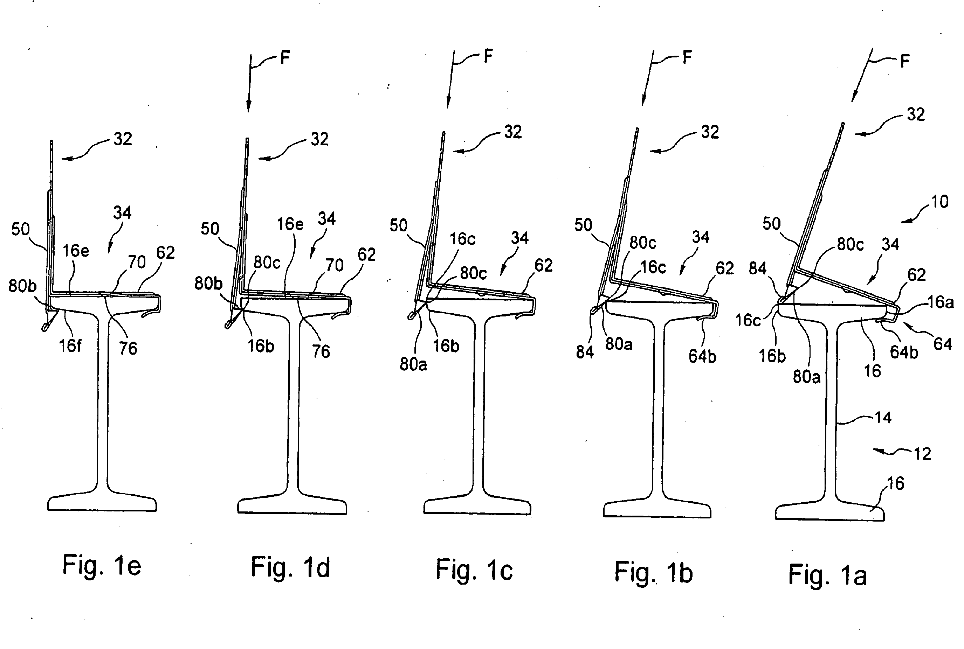

Un tel dispositif est, par exemple, utilisé pour la fixation de profilés métalliques du type fourrures sur une ossature métallique, notamment en acier, d'une habitation. L'ossature est par exemple constituée de montants ou supports 12 verticaux, formés, par exemple, de profilés à section transversale en I. Comme représenté sur les figures 1 a à 1 e illustrant le montage d'un dispositif de fixation sur un tel support et qui sera décrit ultérieurement, le support 12 comporte une âme 14 et deux ailes 16 disposées parallèlement l'une à l'autre.

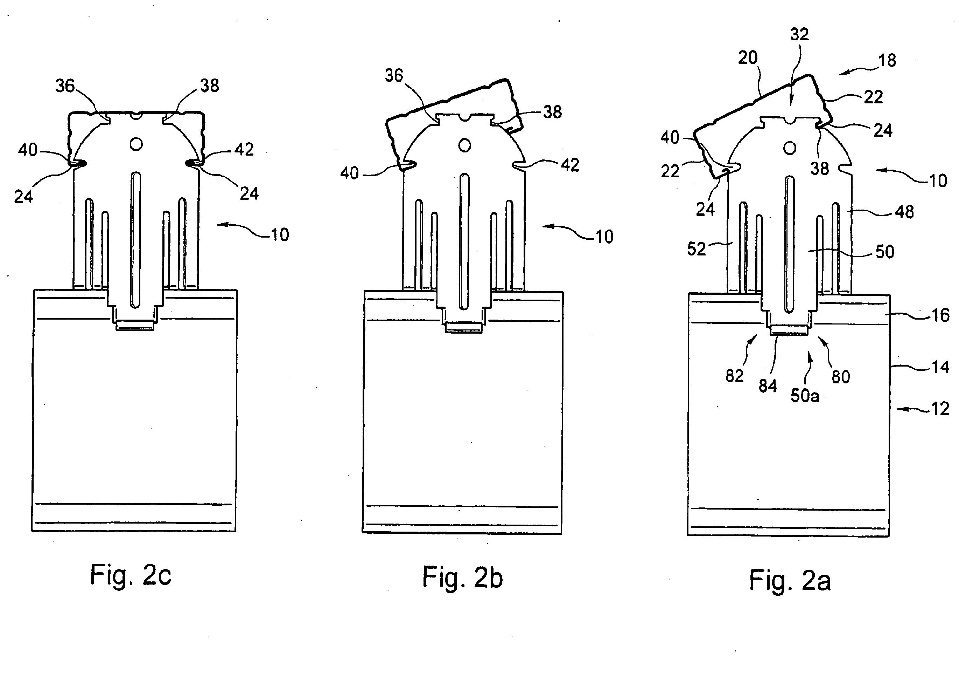

Après montage du dispositif de fixation sur le support 12, un profilé 18 est installé sur le dispositif 10, comme illustré sur les figures 2a à 2c qui seront décrites ultérieurement.

Le profilé 18 est, par exemple, un profilé à section transversale en C qui présente une semelle 20 et deux ailes latérales 22 pourvues, le long de leur bord libre, de retours en équerre 24.

De façon connue, un parement (non représenté), par exemple vertical, formé de plaques (non représentées) disposées de manière jointive les unes aux autres est ensuite fixé sur les profilés 18 en place sur les dispositifs de fixation 10.

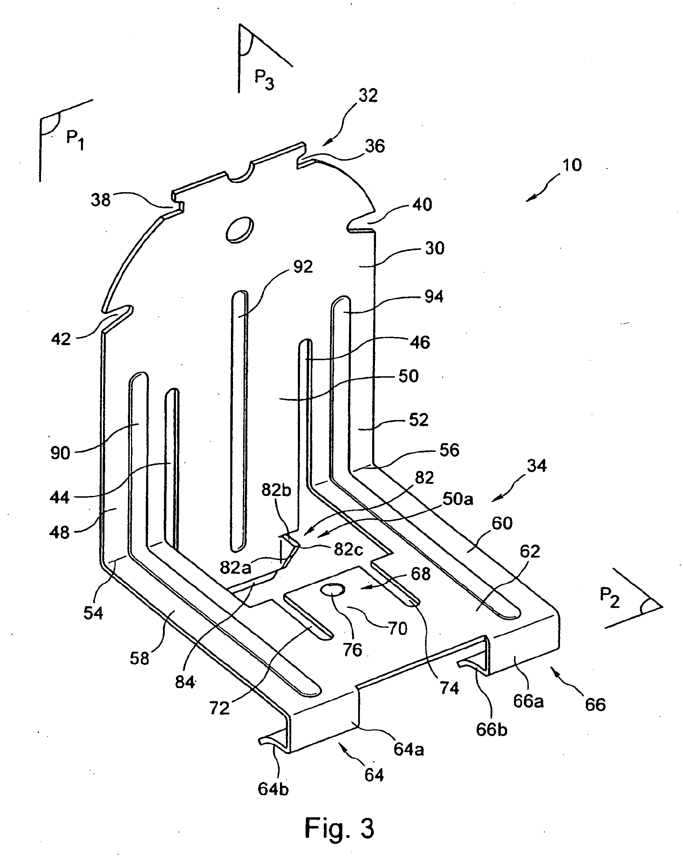

Un mode de réalisation de l'un de ces dispositifs de fixation est plus particulièrement représenté sur les figures 3 à 6 et va maintenant être décrit.

Le dispositif 10 comprend de façon générale un corps 30 en forme d'aile pourvue à une de ses extrémités, dite supérieure, d'une tête 32 destinée à la fixation du profilé 18 (figures 2a à 2c) et reliée, à son extrémité opposée, dite inférieure, à une embase 34 destinée au montage du dispositif sur le support 12.

Ce dispositif formé d'une seule pièce est obtenu à partir d'un flan métallique, notamment en acier, grâce à de simples opérations de découpe et de pliage, sans qu'il soit nécessaire d'effectuer d'autres opérations comme, par exemple, assembler différents éléments entre eux, notamment par soudage, collage, emboîtement...

On notera d'ailleurs que le mode de réalisation représenté sur les figures nécessite peu de matière pour sa fabrication par comparaison avec les dispositifs de fixation connus de l'état de la technique, ce qui diminue son coût de fabrication.

Comme représenté sur les figures, le dispositif a une forme générale de L, l'aile précitée formant la branche verticale du L située dans un premier plan P₁, tandis que la branche horizontale du L, située dans un deuxième plan P₂, forme une partie de l'embase (figure 3).

Dans le mode de réalisation représenté, le dispositif de fixation est symétrique par rapport à un troisième plan P₃, perpendiculaire aux plans P₁ et P₂, et qui est vertical sur la figure 3.

La tête 32 de forme générale arrondie comporte, disposées de façon symétrique par rapport à ce plan, deux paires d'encoches : une première paire d'encoches 36, 38, agencées à proximité de l'extrémité libre de la tête et destinées à favoriser le montage du profilé 18 (figures 2a à 2c), et une seconde paire d'encoches 40, 42, agencées à distance de l'extrémité libre de la tête, dans sa partie la plus large, et qui sont destinées à l'accrochage définitif du profilé (figure 2c).

Deux découpes longitudinales 44, 46, parallèles entre elles et symétriques par rapport au plan P₃, ont été pratiquées dans l'aile 30 afin de séparer celle-ci sur une partie de sa longueur en trois portions d'aile 48, 50, 52 qui s'étendent verticalement en direction de l'extrémité opposée de l'aile où est disposée l'embase 34.

Deux portions, 48, 52, parmi les trois portions d'aile sont disposées de part et d'autre du plan de symétrie P₃ de façon à encadrer la troisième portion d'aile 50.

Les deux portions d'aile 48, 52 sont prolongées dans le deuxième plan P₂, après pliage à angle droit, suivant les lignes de pliage 54, 56, de la partie du dispositif opposée à celle portant la tête, sous la forme de deux bretelles 58, 60 écartées l'une de l'autre de la même distance que les portions 48,52.

Les bretelles 58, 60 rejoignent une platine 62 agencée dans le même plan P₂.

Cette platine est pourvue à son extrémité libre, c'est-à-dire celle opposée à l'extrémité raccordée aux bretelles, de moyens d'appui 64, 66 symétriques par rapport au plan de symétrie P₃ et agencés dans l'alignement respectif des deux portions d'aile 48, 52 et des bretelles 58, 60.

Ces moyens d'appui se présentent chacun sous la forme d'un ensemble formé successivement d'un rebord 64a, 66a s'étendant sensiblement perpendiculairement au plan P₂ de la platine, à partir de l'extrémité libre de celle-ci, et d'un retour 64b, 66b s'étendant sensiblement parallèlement au plan P₂.

Chaque retour 64b, 66b présente une extrémité libre qui s'écarte en oblique par rapport à la platine de façon à faciliter l'engagement du dispositif 10 sur le support 12 (figure 1a).

Il convient de noter que les moyens d'appui peuvent, alternativement, être formés d'un seul rebord et d'un seul retour s'étendant du moyen d'appui 64 au moyen d'appui 66 sur toute la dimension de la platine.

Cependant, si l'on souhaite conserver une plus grande élasticité des moyens d'appui par rapport à la platine, ceci afin de faciliter l'engagement du dispositif sur le support, il est préférable d'avoir deux moyens d'appui séparés.

Le dispositif de fixation selon l'invention comprend également un système de rattrapage de jeu 68 qui sert à compenser les éventuels jeux mécaniques entre le dispositif de fixation 10 et son support 12 lors du montage, et qui résultent, par exemple, des tolérances de fabrication de différents fabricants et/ou d'éventuels revêtements déposés sur le support 12.

Ce système assure ainsi un contact permanent entre le dispositif de fixation et le support, ce qui évite en cas de jeu, dans certaines conditions d'utilisation telles que celles où le dispositif est installé dans les combles d'une habitation dans lesquels du vent peut s'engouffrer, un bruit de claquement du dispositif sur le support sous l'action du vent.

Le système 68 se présente sous la forme d'une lamelle élastique 70 réalisée dans la platine 62 grâce à deux découpes parallèles 72, 74 qui laissent libre la lamelle sur trois côtés.

La lamelle élastique 70 est orientée vers l'aile 30, c'est-à-dire dans la direction opposée à l'extrémité libre de la platine et aux moyens d'appui 64, 66.

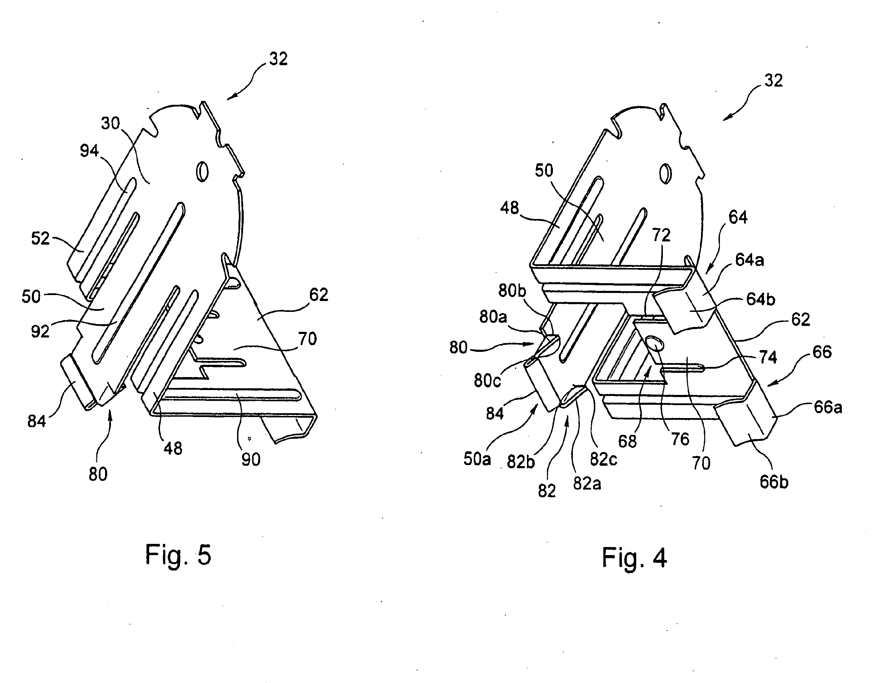

La lamelle élastique 70 comporte un bossage 76 (figure 4) sur la face de la platine qui est destinée à être agencée contre le support 12 (figures 1a à 1e). Seul le creux correspondant sur la face opposée de la platine est visible sur la figure 3.

La troisième portion d'aile 50 se prolonge dans le premier plan P₁, au-delà du plan dans lequel est agencée la platine 62, jusqu'à une extrémité libre 50a et forme ainsi une patte dotée d'un caractère élastique par rapport au reste du dispositif et, notamment, à la platine 62 équipée de ses moyens d'appui.

Cette élasticité permet, notamment à l'extrémité libre 50a de la patte, de se déplacer perpendiculairement au premier plan P₁ (figures 1a à 1e).

L'extrémité libre 50a est pourvue de moyens d'appui 80, 82 orientés en regard des moyens d'appui 64, 66 et qui sont aptes, avec ces derniers, à enserrer conjointement le support 12 (figures 1 a à 1 e).

Comme représenté sur les figures 3 à 6, les moyens d'appui 80, 82 sont plus rapprochés l'un de l'autre que les moyens 64, 66 puisqu'ils sont dans le prolongement de la patte élastique 50, alors que les moyens 64, 66 sont dans l'alignement des deux portions d'aile respectives 48, 52.

Toutefois, l'efficacité du dispositif de fixation 10 ne serait pas affectée si les moyens d'appui 80, 82 étaient dans le prolongement des moyens d'appui respectifs 64, 66.

Entre les moyens d'appui 80, 82, le bord libre 84 de la patte 50 à son extrémité libre est recourbé vers l'extérieur du dispositif et incliné par rapport au plan P₁ (figures 4 et 5) afin de faciliter l'engagement de ces moyens d'appui lors du montage (figure 1a).

Chacun des moyens d'appui 80, 82 situés à égale distance de la tête 32 constitue un organe d'encliquetage séparé qui est adapté à être encliqueté sur un rebord du support 12, comme le montrent les figures 1 a à 1 e, sous l'action d'une poussée exercée sur le dispositif 10, sans avoir recours à un outil.

L'organe d'encliquetage assure la fonction d'un ergot de retenue pour empêcher le retrait du dispositif de fixation après son montage sur le support 12 (figure 1e).

On notera que le système de rattrapage de jeu permet de s'assurer que les moyens d'appui 80, 82 soient toujours en contact avec le dessous du rebord du support.

Le démontage du dispositif de fixation est toutefois possible en écartant latéralement les organes d'encliquetage du support grâce à l'élasticité de la patte 50, par exemple, en cas de repositionnement du dispositif.

L'organe d'encliquetage 80 (resp. 82) possède une forme générale du type comportant une rampe 80a (resp. 82a) orientée vers l'intérieur du dispositif, c'est-à-dire en regard des moyens d'appui de la platine 62, de manière à coopérer avec le support lors de l'opération de montage (figures 1 a à 1e), et se terminant par un retour 80b (resp.82b) qui assure une fonction de retenue de la patte de fixation.

La rampe est agencée sensiblement dans l'alignement du bord libre replié et incliné vers l'extérieur du dispositif pour que l'engagement de la patte élastique 50 soit davantage facilité (figures 1a,1b).

Chaque organe d'encliquetage, de forme triangulaire, est obtenu par découpage et pliage à partir d'un des deux coins de l'extrémité libre 50a de la patte 50.

On notera que l'extrémité libre 50a peut alternativement ne comporter qu'un organe d'encliquetage au lieu des deux qui sont représentés sur les figures. Par exemple, cet organe d'encliquetage unique peut s'étendre de l'organe 80 à l'organe 82 et ainsi réunir ces deux derniers.

Plusieurs nervures longitudinales de renforcement 90, 92, 94 sont respectivement prévues sur les trois portions d'aile 48, 50, 52 ainsi que sur leurs prolongements respectifs (figure 3).

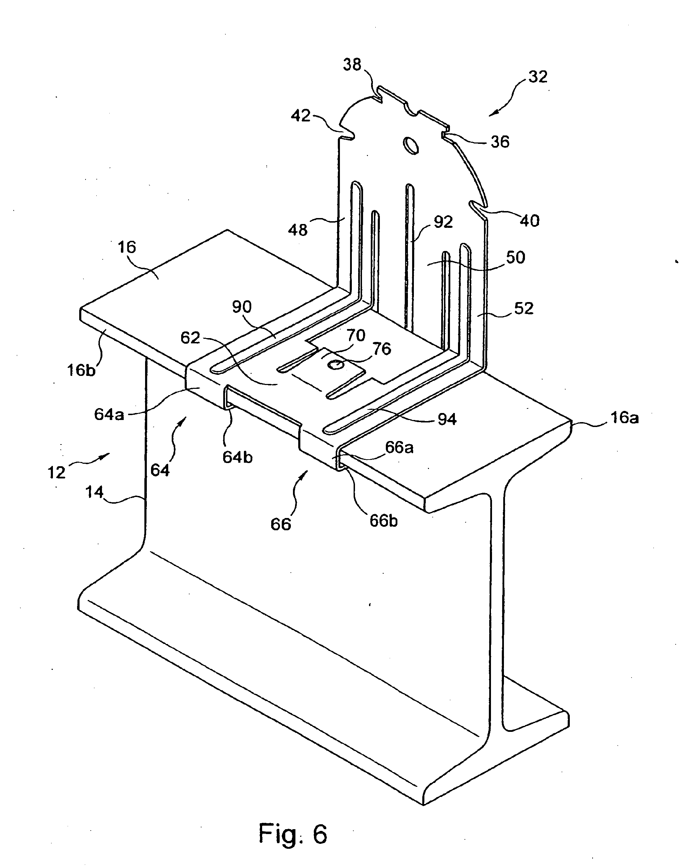

Les parties concaves des nervures 90, 94 sont agencées du côté interne de la patte de fixation visible sur les figures 3 et 6, tandis que la partie concave de la nervure 92 est agencée du côté externe de l'aile 30 visible sur la figure 5.

On notera que les moyens de rigidification sont utiles pour compenser une faible épaisseur du dispositif de fixation 10. L'épaisseur du dispositif dépend toutefois du volume de matière que l'on souhaite utiliser.

Par exemple, l'épaisseur du dispositif en acier est de 0,8 mm.

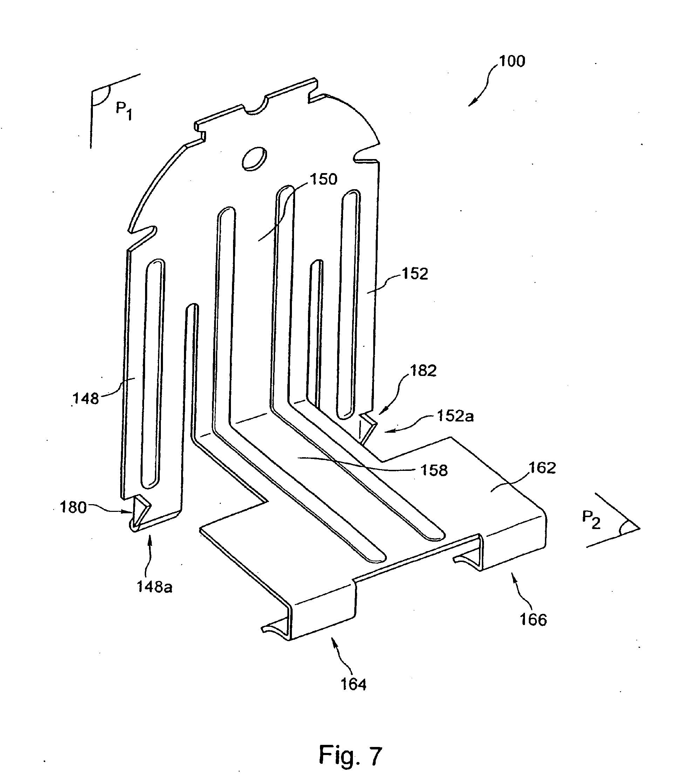

Selon une première variante représentée à la figure 7, la configuration du dispositif de fixation 10 entre les trois portions d'aile 48, 50, 52 est inversée, ce qui conduit au dispositif de fixation 100. Ainsi, deux portions d'aile 148, 152 encadrant une troisième portion d'aile 150 sont prolongées dans le plan P₁ au-delà du plan P₂, de manière à former deux pattes élastiques aux extrémités libres 148a, 152a pourvues chacune d'au moins un organe d'encliquetage 180, 182 identique respectivement aux organes d'encliquetage 80,82.

La troisième portion d'aile 150, quant à elle, est prolongée dans le plan P₂, après pliage, sous la forme d'une bretelle 158 qui s'élargit pour former une platine 162 de dimensions correspondantes à celles de la platine 62. La platine 162 est pourvue à son extrémité libre de moyens d'appui 164, 166 du type comprenant successivement un rebord et un retour, tels que les moyens 64 et 66 de la figure 3.

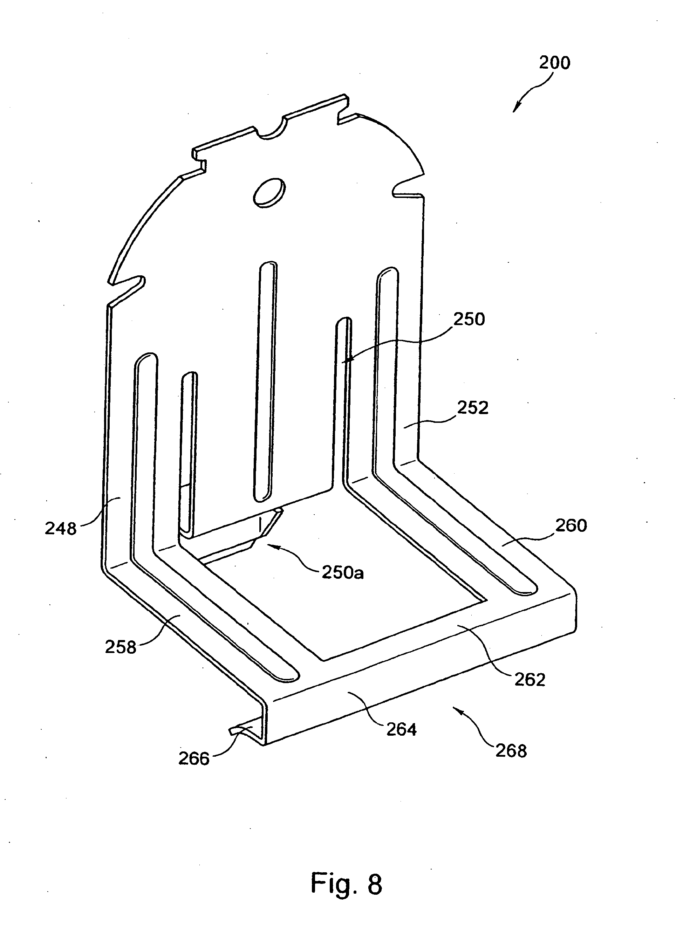

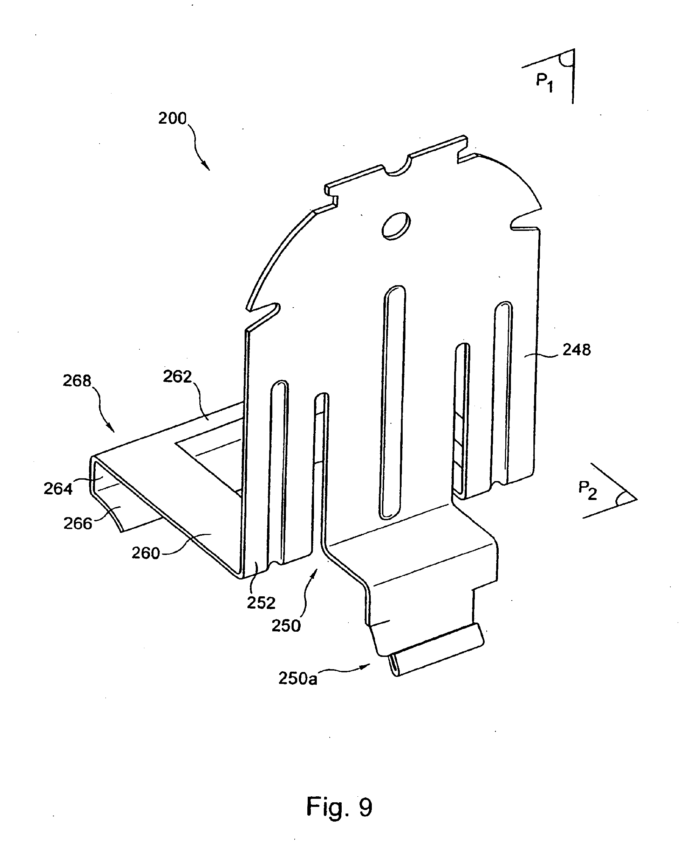

Selon une deuxième variante représentée aux figures 8 et 9, la configuration du dispositif de fixation 10 entre les trois portions d'aile 48, 50, 52 est conservée, mais dans le dispositif 200, la troisième portion 250 est pliée à angle droit dans le plan P₂, en direction opposée des deux portions d'aile 248, 252 qui se prolongent dans ce même plan sous la forme de bretelles respectives 258, 260, réunies à leurs extrémités libres par un bandeau 262.

Un rebord 264 et un retour 266 sont successivement formés à partir du bandeau 262 pour constituer des moyens d'appui 268 sur toute la dimension (largeur) du dispositif.

La troisième portion 250 est ensuite à nouveau pliée à angle droit vers le bas, dans le plan P₁, afin de former une extrémité libre 250a analogue à l'extrémité libre 50a des figures 3 à 6. A cet effet, il est nécessaire de disposer d'une patte de plus grande longueur que la patte 50.

Pour ce faire, il est par exemple possible de réduire les dimensions longitudinales de la platine en supprimant la platine 62 et la lamelle élastique 68 comme représenté sur les figures 8 et 9, ou bien de sélectionner un flan de plus grande dimension longitudinale et dans lequel on enlèvera davantage de matière, ce qui permettra de conserver la lamelle élastique 68.

Conformément à la description qui vient d'être faite en référence aux figures, l'extrémité libre 50a (resp. 250a ou 148a et 152a) de la patte 50 (resp. 250 ou des pattes 148, 150) pourvue de ses moyens d'appui constitue une première partie de l'embase 34 du dispositif de fixation 10 (resp. 200 ou 100), tandis que l'ensemble formé de la platine 62 pourvue de ses moyens d'appui et des bretelles 58, 60 (resp. bretelles 258, 260 et moyens d'appui 268 ou platine 162 et moyens d'appui 164, 166) constitue une deuxième partie de l'embase.

Compte tenu de la conformation du dispositif, la première partie de l'embase formée à partir de l'aile 30 et équipée d'au moins un organe d'encliquetage est élastique par rapport à la deuxième partie de l'embase, également formée à partir de l'aile 30 et équipée de moyens d'appui.

Cette élasticité permet, comme représenté sur les figures 1 a à 1 e et 6, de monter très facilement le dispositif de fixation 10 (resp. 200 ou 100) sur le support 12 et, notamment, sur une de ses ailes 16.

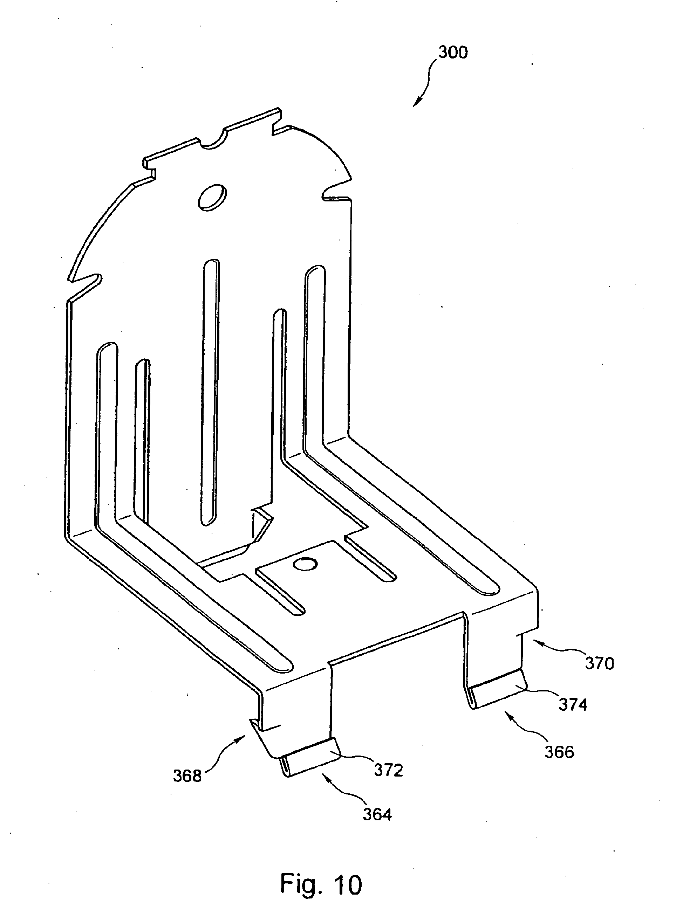

Selon une troisième variante représentée à la figure 10 et issue des figures 3 à 6, les moyens d'appui 364, 366 de la deuxième partie de l'embase du dispositif de fixation 300 peuvent être réalisés également sous la forme d'un ou de plusieurs organes d'encliquetage 368, 370 analogues aux organes 80, 82 pour accroître la facilité de montage du dispositif.

On notera que le bord libre 372, 374 de chaque organe d'encliquetage 368, 370 peut être recourbé vers l'extérieur du dispositif de façon inclinée comme le bord libre 84 de la patte 50.

La pièce constitutive du dispositif de fixation selon l'invention a, suivant une vue de profil telle que l'une de celles représentées aux figures 1 a à 1 e, la forme générale d'un siège.

Une partie de l'embase de la pièce, à savoir la partie horizontale, forme l'assise du siège, tandis que les moyens d'appui des première et deuxième parties de l'embase forment les pieds du siège, le corps de la pièce muni de la tête constitue quant à lui le dossier du siège.

On va maintenant décrire en référence aux figures 1 a à 1 e l'installation du dispositif de fixation 10 sur un support.

L'installation du dispositif de fixation 10 débute par le positionnement des moyens d'appui 64, 66 de la deuxième partie de l'embase 34 contre l'un 16a des côtés 16a, 16b d'une aile 16 du support 12.

L'engagement illustré sur la figure 1 a est facilité par la présence de l'extrémité libre évasée 64b, de même que par la présence de l'extrémité 66b qui n'est pas visible dans cette représentation.

Pendant que cet engagement est effectué, on fait basculer le dispositif de manière à amener la première partie de l'embase au contact du support. Plus particulièrement, sous l'action d'une poussée exercée sur la tête du dispositif dans la direction indiquée par la flèche référencée F (par exemple sur la tête 32), le bord libre évasé 84 de la première partie de l'embase vient en appui sur le bord supérieur 16c du côté 16b du support 12 (figure 1 a) et glisse sur ce dernier, ce qui a pour effet de déformer élastiquement la patte 50, puis c'est au tour des rampes 80a, 82a de la patte 50 (figure 1 b) de glisser sur le bord supérieur 16c.

La patte élastique s'écarte de la deuxième partie de l'embase jusqu'à ce que, toujours sous l'action de la poussée, l'extrémité supérieure 80c, 82c des rampes 80a, 82a soit en contact avec le bord supérieur 16c et glisse sur le coté 16b du support (figure 1c). La patte est alors en position d'écartement maximal par rapport à sa position initiale (figure 1c) et conserve cette déformation jusqu'à ce que l'extrémité supérieure des rampes rencontre le bord inférieur 16d du côté 16b (figure 1 d).

De façon quasi-simultanée, le bossage 76 de la lamelle élastique 70 entre en contact avec la face supérieure 16e de l'aile 16 du support 12.

Sous l'action de la poussée (F), l'extrémité supérieure des rampes dépasse le bord inférieur 16d et, la patte élastique 50 ne rencontrant plus de résistance, revient à sa position initiale de la figure 1 a (figure 1e). Les retours 80b, 82b coopèrent alors avec la surface inférieure 16f, opposée à la surface supérieure 16e de l'aile, pour empêcher un retrait axial non souhaité du dispositif de fixation 10 et donc son démontage intempestif.

Lors de cette dernière opération, la lamelle élastique 70 s'est déformée en s'écartant du plan P₂ de la platine d'une distance qui est suffisante pour rattraper les éventuels jeux mécaniques entre le dispositif 10 et le support et ainsi obtenir un calage en position du dispositif sur le support.

Le fait d'avoir un dispositif de fixation en une seule pièce, d'une part, et qui se monte par clipsage sur un support grâce à l'élasticité d'une partie du dispositif, d'autre part, permet une mise en place rapide du dispositif.

La figure 6 illustre la position de la lamelle 70 légèrement relevée lorsque le dispositif de fixation 10 est assujetti au support 12.

Le dispositif de fixation 10 est alors solidement ancré au support 12 et le profilé 18 peut être installé comme illustré aux figures 2a à 2c.

L'un des retours 24, le retour droit, du profilé est d'abord introduit dans l'encoche supérieure droite 38 de la tête 32 du dispositif, tandis que l'autre retour 24, le retour gauche, est engagé dans l'ouverture de l'encoche inférieure gauche 40, le profilé étant alors agencé de travers (figure 2a).

Le retour droit 24 sort alors de l'encoche supérieure droite 38 et suit le contour arrondi de la tête 32, tandis que le retour gauche 24 pénètre dans l'encoche inférieure gauche 40 (figure 2b).

En continuant à déplacer vers le bas le retour droit 24 du profilé 18 sur le contour arrondi de la tête, dans la zone élargie de cette dernière, grâce à une certaine élasticité du profilé, le retour droit 24 finit par rencontrer l'encoche inférieure droite 42 et s'y loger. Le profilé 18 est alors solidement ancré sur le dispositif de fixation 10.

On notera que l'installation du profilé peut être réalisée de façon symétrique à ce qui vient d'être décrit sur les figures, en positionnant d'abord le retour gauche 24 dans l'encoche inférieure droite 42.

Après installation des profilés, il ne reste alors plus qu'à fixer le parement formé de plaques jointives sur ces profilés.

## Revendications

1. Dispositif de fixation (10) pour profilé métallique à rapporter sur un support (12), du genre comportant une embase (34) destinée à être assujettie au support et un corps muni d'une tête (32) destinée à être assujettie au profilé, le dispositif de fixation étant formé d'une seule pièce dans laquelle l'embase comporte deux parties dont au moins une est élastique par rapport à l'autre et qui sont pourvues de moyens d'appui respectifs (80, 82, 64, 66) destinés à enserrer conjointement le support sur deux côtés opposés de celui-ci, les moyens d'appui d'une des parties de l'embase, appelée première partie (50), comprenant au moins un organe d'encliquetage (80, 82) orienté en regard des moyens d'appui (64, 66) de l'autre partie de l'embase, appelée deuxième partie, **caractérisé en ce que** les moyens d'appui de la deuxième partie forment des moyens de retenue orientés vers ledit au moins un organe d'encliquetage, la pièce en vue de profil ayant la forme générale d'un siège, une partie de l'embase formant l'assise du siège, tandis que les moyens d'appui des première et deuxième parties de l'embase forment les pieds, le corps muni de la tête formant le dossier du siège et ayant une forme d'aile dont au moins une portion d'aile s'étend au-delà de la partie de l'embase formant l'assise du siège de manière à former une patte déformable élastiquement (50 ; 148 ; 152) pourvue dudit au moins un organe d'encliquetage.

2. Dispositif de fixation selon la revendication 1, **caractérisé en ce que** les moyens d'appui de la deuxième partie de l'embase comprennent un ou plusieurs ensembles de retenue formés chacun successivement d'un rebord (64a, 66a) et d'un retour (64b, 66b).

3. Dispositif de fixation selon la revendication 1 ou 2, **caractérisé en ce que** ledit au moins un organe d'encliquetage a une forme générale du type comportant une rampe (80a, 82a) orientée en regard des moyens d'appui de la deuxième partie de l'embase et se terminant par un retour (80b, 82b).

4. Dispositif de fixation selon l'une des revendications 1 à 3, **caractérisé en ce que** la pièce comporte une aile qui, d'une part, comprend la tête à une extrémité et, d'autre part, se sépare en direction de l'extrémité opposée de l'aile en trois portions d'aile (48, 50, 52) s'étendant sensiblement dans un même plan, deux (48, 52) des trois portions d'aile étant prolongées pour former l'une des parties de l'embase tandis que la troisième portion d'aile (50) est prolongée pour former l'autre partie de l'embase.

5. Dispositif de fixation selon la revendication 4, **caractérisé en ce que** les deux portions d'aile (48, 52) prolongées pour former l'une des parties de l'embase sont agencées de part et d'autre de la troisième portion d'aile (50).

6. Dispositif de fixation selon la revendication 4 ou 5, **caractérisé en ce que** la première partie de l'embase s'étend sensiblement dans le même plan, appelé premier plan. (P₁), que celui dans lequel s'étendent les trois portions d'aile, tandis que la deuxième partie de l'embase s'étend successivement dans un deuxième plan (P₂) sensiblement perpendiculaire au premier plan (P₁) et dans un plan parallèle au premier plan (P₁).

7. Dispositif de fixation selon la revendication 6, **caractérisé en ce que** les moyens d'appui de la première partie de l'embase comprennent deux organes d'encliquetage (80, 82) situés sensiblement à la même distance de la tête (32) et écartés l'un de l'autre dans la premier plan.

8. Dispositif de fixation selon l'une des revendications 4 à 7, **caractérisé en ce que** la troisième portion d'aile (50) est prolongée pour former la première partie de l'embase.

9. Dispositif de fixation selon l'une des revendications 2 à 8 lorsque les revendications 3 à 8 dépendent de la revendication 2, **caractérisé en ce que** la deuxième partie de l'embase comprend une platine (62) qui s'étend dans un plan sensiblement perpendiculaire à celui dans lequel s'étend le corps de la pièce, les moyens d'appui (64, 66) de la deuxième partie étant assujettis à cette platine, le rebord (64a, 66a) de l'ensemble s'étendant sensiblement perpendiculairement à la platine et le retour (64b, 66b) s'étendant sensiblement parallèlement à la platine.

10. Dispositif de fixation selon l'une des revendications 4 à 8 et selon la revendication 9, **caractérisé en ce que** les deux portions d'aile sont prolongées jusqu'à la platine de la deuxième partie de l'embase, par l'intermédiaire de deux bretelles (58, 60) écartées l'une de l'autre et s'étendant sensiblement dans le deuxième plan.

11. Dispositif de fixation selon l'une des revendications. 1 à 10, **caractérisé en ce qu'**un système de rattrapage de jeu (70, 76) est prévu sur l'embase.

12. Dispositif de fixation selon les revendications 9 et 11, **caractérisé en ce que** des découpes (72, 74) sont pratiquées dans la platine (62) de manière à constituer une lamelle élastique (70) libre sur trois côtés, ladite lamelle (70) étant pourvue d'au moins un bossage (76) sur une face de la platine destinée à être agencée contre le support.

13. Dispositif de fixation selon l'une des revendications 1 à 12, **caractérisée en ce que** le ou les organes d'encliquetage (80, 82) ont chacun une forme d'ergot de retenue.

## Claims

1. Fixing device (10) for metal sections to be attached to a support (12), of the kind including a base (34) intended to be fastened to the support and a body having a head (32) intended to be fastened to the section, the fixing device being formed of a single piece in which the base includes two parts at least one of which is elastic relative to the other and that are provided with respective bearing means (80, 82, 64, 66) intended to grasp the support conjointly on two opposite sides thereof, the bearing means of one of the parts of the base, called the first part (50), including at least one clipping member (80, 82) oriented to face the bearing means (64, 66) of the other part of the base, called the second part, **characterised in that** the bearing means of the second part form retaining means oriented toward said at least one clipping member, the piece as seen in profile having the general shape of a seat, a part of the base forming the seat of the seat, whereas the bearing means of the first and second parts of the base form the legs, the body provided with the head forming the back of the seat and having a flange shape of which at least one flange portion extends beyond the part of the base forming the seat of the seat so as to form an elastically deformable lug (50; 148; 152) provided with said at least one clipping member.

2. Fixing device according to claim 1, **characterised in that** the bearing means of the second part of the base include one or more retaining assemblies each formed successively of a rim (64a, 66a) and a lip (54b, 66b).

3. Fixing device according to claim 1 or 2, **characterised in that** said at least one clipping member has a general shape of the type including a ramp (80a, 82a) oriented to face the bearing means of the second part of the base and terminating in a lip (80b, 82b).

4. Fixing device according to any of claims 1 to 3, **characterised in that** the piece includes a flange which, on the one hand, includes the head at one end and, on the other hand, is separated in the direction of the opposite end of the flange into three flange portions (48, 50, 52) lying in substantially the same plane, two flange portions (48, 52) of the three flange portions being lengthened to form one of the parts of the base whereas the third flange portion (50) is lengthened to form the other part of the base.

5. Fixing device according to claim 4, **characterised in that** the two flange portions (48, 52) lengthened to form one of the parts of the base are arranged one on each side of the third flange portion (50).

6. Fixing device according to claim 4 or 5, **characterised in that** the first part of the base lies in substantially the same plane, called the first plane (P₁), as the three flange portions, whereas the second part of the base lies successively in a second plane (P₂) substantially perpendicular to the first plane (P₁) and in a plane parallel to the first plane (P₁).

7. Fixing device according to claim 6, **characterised in that** the bearing means of the first part of the base include two clipping members (80, 82) located at substantially the same distance from the head (32) and separated from each other in the first plane.

8. Fixing device according to any of claims 4 to 7, **characterised in that** the third flange portion (50) is lengthened to form the first part of the base.

9. Fixing device according to any of claims 2 to 8 when claims 3 to 8 are dependent on claim 2, **characterised in that** the second part of the base includes a plate (62) that lies in a plane substantially perpendicular to that in which the body of the piece lies, the bearing means (64, 66) of the second part being fastened to this plate, the rim (64a, 66a) of the assembly being substantially perpendicular to the plate and the lip (64b, 66b) being substantially parallel to the plate.

10. Fixing device according to any of claims 4 to 8 and according to claim 9, **characterised in that** the two flange portions are lengthened as far as the plate of the second part of the base by means of two straps (58, 60) separated from each other and lying substantially in the second plane.

11. Fixing device according to any of claims 1 to 10, **characterised in that** a system (70, 76) for eliminating play is provided on the base.

12. Fixing device according to claims 9 and 11, **characterised in that** cut-outs (72, 74) are produced in the plate (62) so as to constitute an elastic tongue (70) free on three sides, said tongue (70) having at least one boss (76) on a face of the plate intended to be disposed against the support.

13. Fixing device according to any of claims 1 to 12, **characterised in that** the clipping member or each of the clipping members (80, 82) has a retaining lug shape.

## Patentansprüche

1. Befestigungsvorrichtung (10) für ein an einem Träger (12) zu befestigendes Metallprofilteil, umfassend einen Sockel (34), der dazu bestimmt ist, an dem Träger angebracht zu werden, und einen Körper, der mit einem Kopf (32) versehen ist, der dazu bestimmt ist, an dem Profilteil angebracht zu werden, wobei die Befestigungsvorrichtung aus einem Werkstück gebildet ist, in dem der Sockel zwei Teile umfasst, von denen mindestens einer bezüglich des anderen elastisch ist und die mit jeweiligen Abstützmitteln (80, 82, 64, 66) versehen sind, die dazu bestimmt sind, zusammen den Träger auf zwei entgegengesetzten Seiten von diesem einzuklemmen, wobei die Abstützmittel eines der Teile des Sockels, erster Teil (50) genannt, mindestens ein Einklinkorgan (80, 82) umfassen, das den Abstützmitteln (64, 66) des anderen Teils des Sockels, zweiter Teil genannt, zugewandt ist, **dadurch gekennzeichnet, dass** die Abstützmittel des zweiten Teils Rückhaltemittel bilden, die auf das mindestens eine Einklinkorgan zu gerichtet sind, wobei das Werkstück in Profilansicht die allgemeine Form eines Sitzes besitzt, wobei ein Teil des Sockels die Sitzfläche des Sitzes bildet, während die Abstützmittel des ersten und des zweiten Teils des Sockels die Füße bilden, wobei der mit dem Kopf versehene Körper die Rückenlehne des Sitzes bildet und die Form eines Schenkels besitzt, von dem mindestens ein Schenkelabschnitt sich über den die Sitzfläche des Sitzes bildenden Teil des Sockels hinaus erstreckt, so dass ein elastisch verformbarer Lappen (50; 148; 152) gebildet wird, der mit dem mindestens einen Einklinkorgan versehen ist.

2. Befestigungsvorrichtung nach Anspruch 1, **dadurch gekennzeichnet, dass** die Abstützmittel des zweiten Teils des Sockels ein oder mehrere Rückhalteeinheiten umfassen, die jeweils nacheinander von einer Abwinklung (64a, 66a) und einer Umbiegung (64b, 66b) gebildet sind.

3. Befestigungsvorrichtung nach Anspruch 1 oder 2, **dadurch gekennzeichnet, dass** das mindestens eine Einklinkorgan eine allgemeine Form von dem Typ aufweist, der eine Rampe (80a, 82a) umfasst, die den Abstützmitteln des zweiten Teils des Sockels zugewandt ist und mit einer Umbiegung (80b, 82b) endet.

4. Befestigungsvorrichtung nach einem der Ansprüche 1 bis 3, **dadurch gekennzeichnet, dass** das Werkstück einen Schenkel umfasst, der einerseits an einem Ende den Kopf aufweist und andererseits sich in Richtung des entgegengesetzten Endes des Schenkels in drei Schenkelabschnitte (48, 50, 52) teilt, die sich im Wesentlichen in einer gemeinsamen Ebene erstrecken, wobei zwei (48, 52) der drei Schenkelabschnitte verlängert sind, um einen der Teile des Sockels zu bilden, während der dritte Schenkelabschnitt (50) verlängert ist, um den anderen Teil des Sockels zu bilden.

5. Befestigungsvorrichtung nach Anspruch 4, **dadurch gekennzeichnet, dass** die beiden Schenkelabschnitte (48, 52), die verlängert sind, um einen der Teile des Sockels zu bilden, zu beiden Seiten des dritten Schenkelabschnitts (50) angeordnet sind.

6. Befestigungsvorrichtung nach Anspruch 4 oder 5, **dadurch gekennzeichnet, dass** der erste Teil des Sockels sich im Wesentlichen in derselben Ebene, erste Ebene (P₁) genannt, erstreckt, in der sich die drei Schenkelabschnitte erstrecken, während der zweite Teil des Sockels sich nacheinander in einer zweiten Ebene (P₂), die zur ersten Ebene (P₁) im Wesentlichen senkrecht ist, und in einer zur ersten Ebene (P₁) parallelen Ebene erstreckt.

7. Befestigungsvorrichtung nach Anspruch 6, **dadurch gekennzeichnet, dass** die Abstützmittel des ersten Teils des Sockels zwei Einklinkorgane (80, 82) umfassen, die im Wesentlichen im gleichen Abstand vom Kopf (32) gelegen sind und in der ersten Ebene voneinander beabstandet sind.

8. Befestigungsvorrichtung nach einem der Ansprüche 4 bis 7, **dadurch gekennzeichnet, dass** der dritte Schenkelabschnitt (50) verlängert ist, um den ersten Teil des Sockels zu bilden.

9. Befestigungsvorrichtung nach einem der Ansprüche 2 bis 8, wenn die Ansprüche 3 bis 8 von Anspruch 2 abhängig sind, **dadurch gekennzeichnet, dass** der zweite Teil des Sockels eine Platine (62) umfasst, die sich in einer Ebene erstreckt, die zu derjenigen im Wesentlichen senkrecht ist, in der sich der Körper des Werkstücks erstreckt, wobei die Abstützmittel (64, 66) des zweiten Teils an dieser Platine angebracht sind, wobei die Abwinklung (64a, 66a) der Einheit sich im Wesentlichen senkrecht zur Platine erstreckt und die Umbiegung (64b, 66b) sich im Wesentlichen parallel zur Platine erstreckt.

10. Befestigungsvorrichtung nach einem der Ansprüche 4 bis 8 und nach Anspruch 9, **dadurch gekennzeichnet, dass** die beiden Schenkelabschnitte bis zur Platine des zweiten Teils des Sockels über zwei Anschlüsse (58, 60) verlängert sind, die voneinander entfernt sind und sich im Wesentlichen in der zweiten Ebene erstrecken.

11. Befestigungsvorrichtung nach einem der Ansprüche 1 bis 10, **dadurch gekennzeichnet, dass** an dem Sockel ein Spielausgleichssystem (70, 76) vorgesehen ist.

12. Befestigungsvorrichtung nach den Ansprüche 9 und 11, **dadurch gekennzeichnet, dass** in der Platine (62) Ausschnitte (72, 74) vorgesehen sind, so dass eine an drei Seiten freie elastische Lamelle (70) gebildet wird, die auf einer Seite der Platine, die dazu bestimmt ist, an den Träger angelegt zu werden, mit mindestens einer Erhebung (76) versehen ist.

13. Befestigungsvorrichtung nach einem der Ansprüche 1 bis 12, **dadurch gekennzeichnet, dass** das oder die Einklinkorgane (80, 82) jeweils die Form einer Rückhaltenase aufweisen.
